# EUROPEAN PATENT APPLICATION

(11) **EP 4 354 621 A1**
(43) Date of publication of application: **17.04.2024**
(21) Application number: 22897502.5
(22) Date of filing: 25.10.2022
(51) Int. Cl.: H01M 50/289

(54) **BATTERY END PLATE ASSEMBLY, BATTERY, AND ELECTRIC DEVICE**

(30) Priority: 23.11.2021 CN 202122885566 U
(71) Applicant: Contemporary Amperex Technology Co., Limited, Ningde, Fujian 352100 (CN)
(72) Inventor: ZHANG, Zhihong, Ningde, Fujian 352100 (CN); LI, Zhengjuan, Ningde, Fujian 352100 (CN); ZOU, Yang, Ningde, Fujian 352100 (CN); ZHENG, Shixiong, Ningde, Fujian 352100 (CN); LI, Pengfei, Ningde, Fujian 352100 (CN)
(74) Representative: Kraus & Lederer PartGmbB
(86) International application number: PCT/CN2022/127172
(87) International publication number: WO 2023/093419

(57) **Abstract**

This application relates to a battery end plate assembly, a battery, and an electric apparatus. The battery end plate assembly includes an end plate and a side plate. The end plate is provided with a connecting groove on a side for connecting the side plate. An end of the side plate is embedded in the connecting groove and abuts against a side wall of the connecting groove. In such battery end plate assembly, the end plate is provided with the connecting groove, the end of the side plate is embedded in the connecting groove, and the side plate is made to abut against the side wall of the connecting groove. Due to the side plate being embedded in and abutting against the connecting groove, an interaction force is present between the connecting groove and the side plate. That means the connecting groove can provide a certain clamping and fixing effect for the side plate to assist a positioning fixture in positioning the side plate, thereby facilitating installation of the side plate and preventing the side plate from tilt during installation.

## Description

### CROSS-REFERENCE TO RELATED APPLICATIONS

This application refers to Chinese Patent Application No. 202122885566.5, filed on November 23, 2021 and entitled "BATTERY END PLATE ASSEMBLY, BATTERY, AND ELECTRIC APPARATUS", which is incorporated herein by reference in its entirety.

### TECHNICAL FIELD

This application relates to the field of battery technologies, and in particular, to a battery end plate assembly, a battery, and an electric apparatus.

### BACKGROUND

Energy conservation and emission reduction are crucial to the sustainable development of the automobile industry. Electric vehicles, with their advantages in energy conservation and environmental protection, have become an important part of the sustainable development of the automobile industry. For electric vehicles, battery technology is an important factor in connection with their development.

A traction battery includes a battery end plate assembly for fastening a battery cell. A battery end plate assembly typically consists of an end plate and a side plate, where the side plate is a thin plate. Thus, it is inconvenient to install the side plate when connecting the end plate with the side plate.

### SUMMARY

In view of the preceding problem, this application provides a rolling apparatus and a processing device, so as to solve the problem of installation inconvenience of a side plate of a battery end plate assembly in some cases.

According to a first aspect, this application provides a battery end plate assembly including an end plate and a side plate. The end plate is provided with a connecting groove on a side for connecting the side plate. An end of the side plate is embedded in the connecting groove and abuts against a side wall of the connecting groove.

In such battery end plate assembly, the end plate is provided with the connecting groove, the end of the side plate is embedded in the connecting groove, and the side plate is made to abut against the side wall of the connecting groove. Due to the side plate being embedded in and abutting against the connecting groove, an interaction force is present between the connecting groove and the side plate. That means the connecting groove can provide a certain clamping and fixing effect for the side plate to assist a positioning fixture in positioning the side plate, thereby facilitating installation of the side plate and preventing the side plate from tilt during installation.

In a possible embodiment, depth of the connecting groove is equal to thickness of the side plate.

The depth of the connection groove is set to be equal to the thickness of the side plate, so that after the side plate is connected to the end plate, the side plate does not exceed the end plate and is at a same horizontal plane as a side, of the end plate, connecting the side plate. This facilitates subsequent automatic fixation of the battery end plate assembly with the connection completed, thereby facilitating production in subsequent processes.

In a possible embodiment, the end plate and the side plate are connected through friction stir welding.

The end plate and the side plate being connected through friction stir welding can not only guarantee strength of the connection between the end plate and the side plate, but also eliminate the need to implement the connection with the help of other fixing components and to consume materials such as welding rods. No weld seam protruding from the side of the end plate is generated, so that subsequent automatic assembly is not affected.

In a possible embodiment, a weld seam generated by welding is arranged along a boundary line on which the end plate and the side plate abut against each other.

The weld seam is arranged along the boundary line on which the end plate and the side plate abut against each other, so that the end plate and the side plate are stirred and extruded together by a stirring head and a shaft shoulder, making a material of an end plate part mixed into a side plate part to compensate for a thickness loss of the side plate caused by the side plate being stirred and extruded by the stirring head and the shaft shoulder, thereby increasing effective thickness of the weld seam.

In a possible embodiment, both start and end points of the weld seam generated by welding are located on the end plate.

Both the start and end points of the weld seam are arranged on the end plate, so that a position with low connection strength at the weld seam is on a side of the end plate with higher strength, preventing the position with low connection strength at the weld seam from being on the side plate or at the joint between the side plate and the end plate, and thus allowing for higher strength of the weld seam at the joint between the side plate and the end plate.

In a possible embodiment, the end plate and the side plate are made of homogeneous materials.

The end plate and the side plate being made of homogeneous materials allows for consistent metal fluidity, in plasticization status, of the end plate and the side plate during a friction stir welding process, and thus achieving more thorough mixing.

In a possible embodiment, the end plate is provided with a recess on a side away from the side plate.

The side of the end plate being provided with the recess can reduce weight of the end plate, thus allowing for lighter battery end plate assembly and battery.

In a possible embodiment, the recess is provided with a plurality of stiffeners arranged in a crisscross pattern.

The recess being provided with stiffeners can guarantee strength of the end plate as much as possible while reducing the weight of the end plate.

According to a second aspect, this application further provides a battery including any battery end plate assembly described above.

According to a third aspect, this application further provides an electric apparatus including the foregoing battery, the battery being configured to supply electrical energy.

This application relates to a battery end plate assembly, a battery, and an electric apparatus. The end plate is provided with a connecting groove, an end of a side plate is embedded in the connecting groove, and the side plate is made to abut against a side wall of the connecting groove, so that the connecting groove can provide a certain clamping and fixing effect for the side plate to assist a positioning fixture to locate the side plate, thereby facilitating installation of the side plate and preventing the side plate from tilt during installation. Depth of the connection groove is set to be equal to thickness of the side plate, so that after the side plate is connected to the end plate, the side plate does not exceed the end plate and is at a same horizontal plane as a side, of the end plate, connecting the side plate, facilitating production in subsequent processes. A weld seam generated by friction stir welding is arranged along a boundary line on which the end plate and the side plate abut against each other, so that a material of an end plate part may be mixed into a side plate part, increasing effective thickness of the weld seam. Both start and end points of the weld seam are arranged on the end plate, so that strength of the weld seam at the joint between the side plate and the end plate is higher.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions of embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts. In the accompanying drawings:
FIG. 1 is a schematic structural diagram of a vehicle according to an embodiment of this application;
FIG. 2 is a schematic structural exploded view of a battery according to an embodiment of this application;
FIG. 3 is a schematic structural diagram of a battery end plate assembly according to an embodiment of this application;
FIG. 4 is a schematic structural diagram of the end plate in FIG. 3;
FIG. 5 is a top cross-sectional view of FIG. 3; and
FIG. 6 is a schematic structural diagram of the battery end plate assembly in FIG. 3 with connection completed.

Reference signs are as follows:
1000. vehicle;
100. battery; 200. controller; 300. motor;
10. box; 11. first part; 12. second part;
20. battery cell;
30. battery end plate assembly; 31. end plate; 311. connecting groove; 312. recess; 313. stiffener; 32. side plate; and 33. weld seam.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence, or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

In the description of the embodiments of the present application, unless otherwise clearly specified and defined, a first feature being "on" or "under" a second feature may mean that the first and second features are in direct contact, or the first and second features are in indirect contact through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The inventors have noticed that a battery end plate assembly included in a traction battery suffers from installation inconvenience due to a relatively thin side plate. Specifically, during connection between an end plate and a side plate, the two need to be clamped and fixed separately before they are connected. During fixing of the side plate, because the side plate is relatively thin, it is inconvenient to fix the side plate in a thickness direction of the side plate, and the side plate may bend or even break when subjected to an excessive force in length and width directions.

To alleviate the problem of inconvenient installation of the side plate of the battery end plate assembly, the applicant has found through research that a side of the end plate can be provided with a connecting groove for placing the side plate. Before the end plate and the side plate are connected, the side plate is embedded in the connecting groove and is positionally fixed by side walls of the groove, facilitating easy installation of the side plate.

Based on the above considerations, the inventors, after in-depth research, have designed a battery end plate assembly. In such battery end plate assembly, an end plate is provided with a connecting groove, an end of a side plate is embedded in the connecting groove, and the side plate is made to abut against a side wall of the connecting groove. Due to the side plate being embedded in and abutting against the connecting groove, an interaction force is present between the connecting groove and the side plate. That means the connecting groove can provide a certain clamping and fixing effect for the side plate to facilitate installation of the side plate.

An embodiment of this application provides an electric apparatus that uses a battery as a power source. The electric apparatus may be but is not limited to a mobile phone, a tablet computer, a notebook computer, an electric toy, an electric tool, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

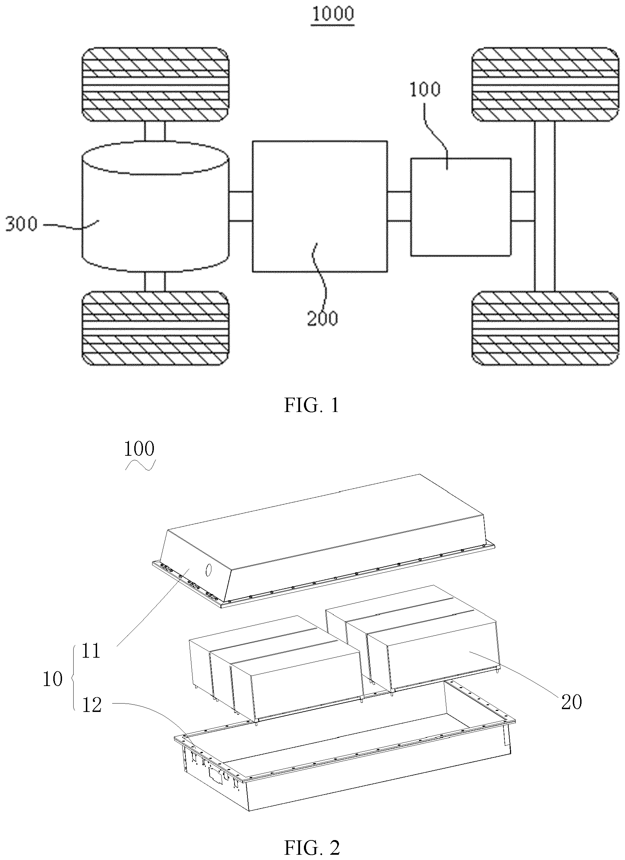

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 100 according to some embodiments of this application. The battery 100 includes a box 10, a battery cell 20, and a battery end plate assembly 30 (not shown in FIG. 2). The battery cell 20 is accommodated in the box 10, and the battery end plate assembly 30 is configured to fasten the battery cell 20. The box 10 is configured to provide an accommodating space for the battery cell 20. The box 10 may be a variety of structures. In some embodiments, the box 10 may include a first part 11 and a second part 12. The first part 11 and the second part 12 fit together so that the first part 11 and the second part 12 jointly define a space for accommodating the battery cell 20. The second part 12 may be a hollow structure with an opening at one side, the first part 11 may be a plate-shaped structure, and the first part 11 covers the opening side of the second part 12 for the first part 11 and the second part 12 to jointly define an accommodating space. Alternatively, the first part 11 and the second part 12 may both be hollow structures with an opening at one side, and the opening side of the first part 11 is engaged with the opening side of the second part 12. Certainly, the box 10 formed by the first part 11 and the second part 12 may have a variety of shapes, for example, cylinder or cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

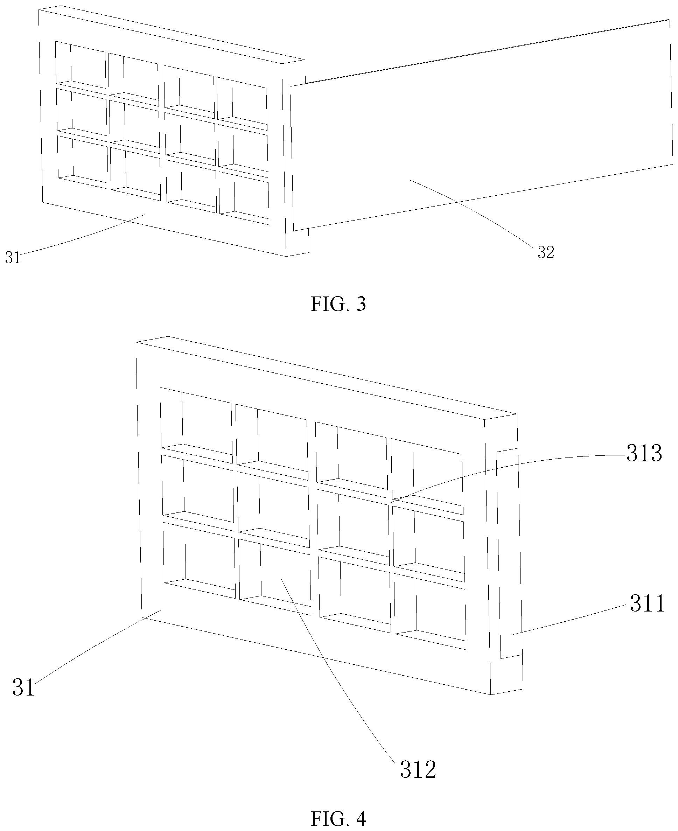

FIGs. 3 and 4 show a battery end plate assembly 30 according to an embodiment of this application. The battery end plate assembly 30 includes an end plate 31 and a side plate 32. The end plate 31 is provided with a connecting groove 311 on a side for connecting the side plate 32, and an end of the side plate 32 is embedded in the connecting groove 311 and abuts against a side wall of the connecting groove 311.

An end of the side plate 32 abutting against a side wall of the connecting groove 311 means that the side plate 32 is not only in contact with the connecting groove 311, but an interaction force is also present between the side plate 32 and the connecting groove 311.

The connecting groove 311 accommodates an end of the side plate 32, and a side wall of the connecting groove 311 abuts against the side plate 32. In this way, an interaction force is generated, and a position of the side plate 32 can be limited.

During arrangement of the connecting groove 311, a connection angle of the end plate 31 and the side plate 32 needs to be considered. For example, in this embodiment, as shown in FIG. 3, the end plate 31 and the side plate 32 are connected in a thickness direction of the side plate 32, and size of the connecting groove 311 fits width of the side plate 32, so that the connecting groove 311 can accommodate an end of the side plate 32 in a length direction of the side plate 32. Moreover, as shown in FIG. 3, the side plate 32 and the end plate 31 are connected in a mutually perpendicular manner. In this case, the connecting groove 311 is a rectangular groove as shown in FIG. 4. In some other possible arrangements, the side on which the side plate 32 and the connecting groove 311 abut against each other may be an inclined surface. In this case, the side wall of the connecting groove 311 may be set as an inclined surface adapted to the side of the side plate 32.

In such battery end plate assembly 30, the end plate 31 is provided with the connecting groove 311, the end of the side plate 32 is embedded in the connecting groove 311, and the side plate 32 is made to abut against the side wall of the connecting groove 311. Due to the side plate 32 being embedded in and abutting against the connecting groove 311, an interaction force is present between the connecting groove 311 and the side plate 32. That means the connecting groove 311 can provide a certain clamping and fixing effect for the side plate 32 to assist a positioning fixture in positioning the side plate 32, thereby facilitating installation of the side plate 32 and preventing the side plate 32 from tilt during installation.

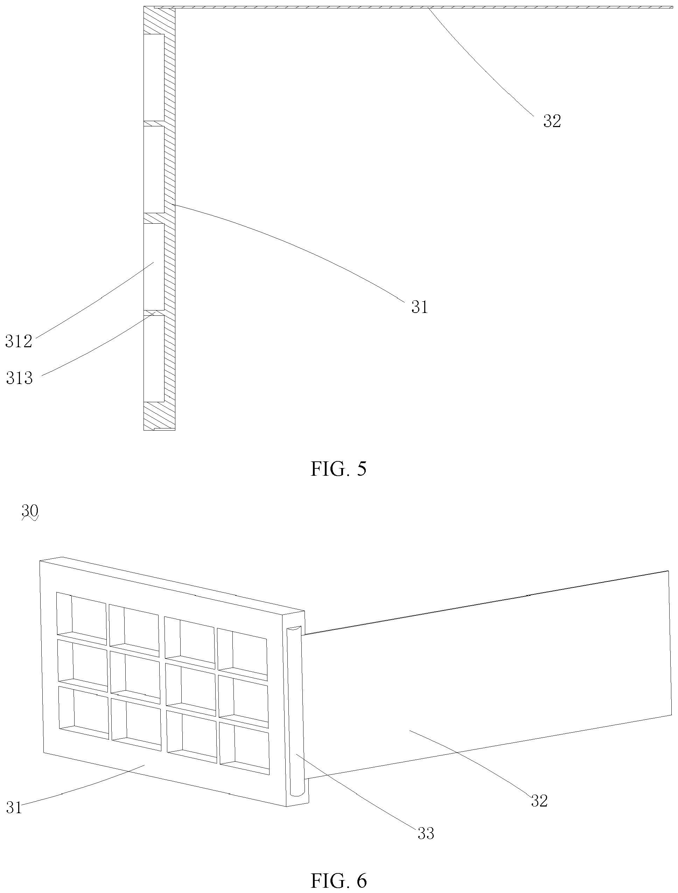

Referring to FIG. 5, according to some embodiments of this application, depth of the connecting groove 311 is equal to thickness of the side plate 32.

It can be understood that the depth and the thickness being equal does not mean that the depth and the thickness are limited to be completely the same. There may be a given range of error between the depth and the thickness, and the depth of the connecting groove 311 and the thickness of the side plate 32 are equal within such allowable range of error.

The depth of the connection groove 311 is set to be equal to the thickness of the side plate 32, so that after the side plate 32 is connected to the end plate 31, the side plate 32 does not exceed the end plate 31 and is at a same horizontal plane as a side, of the end plate 31, connecting the side plate 32. This facilitates subsequent automatic fixation of the battery end plate assembly 30 with the connection completed, thereby facilitating production in subsequent processes.

According to some embodiments of this application, the end plate 31 and the side plate 32 are connected through friction stir welding.

Friction stir welding (Friction Stir Welding, FSW) indicates that a material being welded is partially melted under heat generated by friction between a welding tool rotating at a high speed and a workpiece. With the welding tool moves forward along the welding interface, a plasticized material flows from the front of the welding tool to the rear under a frictional force generated by rotation of the welding tool. A dense solid-state weld seam 33 is formed under extrusion by the welding tool.

In some other embodiments, the end plate 31 and the side plate 32 may be connected in a pattern of thread and so on.

The end plate 31 and the side plate 32 being connected through friction stir welding can not only guarantee strength of the connection between the end plate 31 and the side plate 32, but also eliminate the need to implement the connection with the help of other fixing components and to consume materials such as welding rods. No weld seam 33 protruding from any side of the end plate 31 is generated, so that subsequent automatic assembly is not affected.

Referring to FIG. 6, according to some embodiments of this application, the weld seam 33 generated by welding is arranged along a boundary line on which the end plate 31 and the side plate 32 abut against each other.

During welding of the end plate 31 and the side plate 32 through friction stir welding, a stirring head and a shaft shoulder rotate at high speeds, generating heat to plasticize metal at a contact area and to extrude the end plate 31 and the side plate 32, thereby forming the dense weld seam 33.

The boundary line on which the end plate 31 and the side plate 32 abut against each other indicates the boundary line where surfaces, come into contact and abut against each other, of the end plate 31 and the side plate 32 connect. With the weld seam 33 arranged along the boundary line on which the end plate 31 and the side plate 32 abut against each other, the end plate 31 and the side plate 32 can be plasticized together.

In some cases, friction stir welding is performed directly on the side plate 32. In some cases, due to the relatively thin side plate 32, thickness at the weld seam 33 of the side plate 32 is reduced after the side plate 32 is stirred and extruded by the stirring head and the shaft shoulder, leading to decreased strength. In these embodiments, the weld seam 33 is arranged along the boundary line on which the end plate 31 and the side plate 32 abut against each other, so that the end plate 31 and the side plate 32 can be stirred and extruded together by the stirring head and the shaft shoulder, making a material of an end plate 31 part be mixed into a side plate 32 part to compensate for a thickness loss of the side plate 32 caused by the side plate being stirred and extruded by the stirring head and the shaft shoulder, thereby increasing effective thickness of the weld seam 33.

Referring to FIG. 6, according to some embodiments of this application, both start and end points of the weld seam 33 generated by welding are located on the end plate 31.

The start point of the weld seam 33, that is, a start position of the weld seam 33, is where welding starts. The end point of the weld seam 33, that is, an end position of the weld seam 33, is where welding ends. During welding of the end plate 31 and the side plate 32 through friction stir welding, defects are generated at the start and end positions of the weld seam 33. In detail, at the start position of the weld seam 33 where the stirring head and the shaft shoulder start rotating, rotation speeds and heat generated are relatively low, resulting in poor fluidity of materials of the end plate 31 and the side plate 32, thereby leading to insufficient connection strength. At the end position of the weld seam 33, the stirring head is removed from the end plate 31 and the side plate 32, so flowing materials in the end plate 31 and the side plate 32 may not completely fill an original position of the stirring head, resulting in a keyhole.

Because the end plate 31 and the side plate 32 are connected in the thickness direction of the side plate 32, the end plate 31 is thicker and stronger than the side plate 32 in the connection direction. Both the start and end points of the weld seam 33 are arranged on the end plate 31, so that a position with low connection strength at the weld seam 33 is on a side of the end plate 31 with higher strength, preventing the position with low connection strength at the weld seam 33 from being on the side plate 32 or at the joint between the side plate 32 and the end plate 31, thus allowing for higher strength of the weld seam 33 at the joint between the side plate 32 and the end plate 31.

According to some embodiments of this application, the end plate 31 and the side plate 32 are made of homogeneous materials.

Being made of homogeneous materials means that the end plate 31 and the side plate 32 are made of a same material, typically a metal material. In these embodiments, an end plate 31 and a side plate 32 are both aluminum alloy metal.

The end plate 31 and the side plate 32 being arranged as made of homogeneous materials allows for consistent metal fluidity, in plasticization status, of the end plate 31 and the side plate 32 during a friction stir welding process, and thus achieving more thorough mixing.

Referring to FIGs. 4 and 5, according to some embodiments of this application, the end plate 31 is provided with a recess 312 on a side away from the side plate 32.

The side of the end plate 31 away from the side plate 32 indicates a side, of the end plate 31, that is not in contact with the side plate 32, and may be an upper surface, lower surface, or side as shown in FIG. 4. In these embodiments, the recess 312 is provided on a side of the end plate 31.

The recess 312 is recessed on the end plate 31, and one or more recesses 312 may be provided. The recess(es) 312 may be arranged on one side of the end plate 31 or on multiple sides of the end plate 31. In these embodiments, the recess(es) 312 are arranged on one side of an end plate 31.

The side of the end plate 31 being provided with the recess 312 can reduce weight of the end plate 31, thus allowing for lighter battery end plate assembly 30 and battery.

Referring to FIGs. 4 and 5, according to some embodiments of this application, the recess 312 is provided with a plurality of stiffeners 313 arranged in a crisscross pattern.

A plurality of stiffeners 313 are provided, and the plurality of stiffeners 313 are arranged inside the recess 312 in a crisscross pattern. In this way, the end plate 31 can be supported in both length and width directions, guaranteeing overall strength of the end plate 31. Height of the stiffener 313 may be set as the same as depth of the recess 312, so that the end plate 31 can be supported in the thickness direction as well, thereby guaranteeing strength of the end plate 31.

The recess 312 being provided with stiffeners 313 can guarantee strength of the end plate 31 as much as possible while reducing the weight of the end plate 31.

This application further provides a battery 100 including any battery end plate assembly 30 described above.

This application further provides an electric apparatus including the foregoing battery 100, the battery 100 being configured to supply electrical energy.

According to some embodiments of this application, referring to FIGs. 3 to 6, this application provides a battery end plate assembly 30 that includes an end plate 31 and a side plate 32 welded through friction stir welding and made of homogeneous materials. The end plate 31 is provided with a connecting groove 311 of which depth is consistent with thickness of the side plate 32. When the end plate 31 and the side plate 32 are connected, the side plate 32 is embedded in the connecting groove 311. Moreover, a weld seam 33 of the end plate 31 and the side plate 32 is arranged along a boundary line on which the end plate 31 and the side plate 32 abut against each other, and both start and end points of the weld seam 33 are located on the end plate 31. The arrangements in the foregoing embodiments facilitate easier fixing and limiting of the side plate 32 during a connection process of the end plate 31 and the side plate 32, preventing the side plate 32 from tilt during installation and ensuring higher strength of connection between the end plate 31 and the side plate 32.

According to some embodiments of this application, referring to FIG. 2, this application provides a battery. The battery 100 includes the battery end plate assembly 30 in the foregoing embodiments, the battery end plate assembly 30 being configured to fasten a battery cell 20.

According to some embodiments of this application, referring to FIG. 1, this application provides an electric apparatus, which may specifically be a vehicle 1000, including the battery 100 in the foregoing embodiments, the battery 100 being configured to supply electrical energy.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery end plate assembly comprising an end plate (31) and a side plate (32), wherein the end plate (31) is provided with a connecting groove (311) on a side for connecting the side plate (32), and an end of the side plate (32) is embedded in the connecting groove (311) and abuts against a side wall of the connecting groove (311).

2. The battery end plate assembly according to claim 1, wherein depth of the connecting groove (311) is equal to thickness of the side plate (32).

3. The battery end plate assembly according to claim 1 or 2, wherein the end plate (31) and the side plate (32) are connected through friction stir welding.

4. The battery end plate assembly according to any one of claims 1 to 3, wherein a weld seam (33) generated by welding is arranged along a boundary line on which the end plate (31) and the side plate (32) abut against each other.

5. The battery end plate assembly according to any one of claims 1 to 4, wherein both start and end points of the weld seam (33) generated by welding are located on the end plate (31).

6. The battery end plate assembly according to any one of claims 1 to 5, wherein the end plate (31) and the side plate (32) are made of homogeneous materials.

7. The battery end plate assembly according to any one of claims 1 to 6, wherein the end plate (31) is provided with a recess (312) on a side away from the side plate (32).

8. The battery end plate assembly according to claim 7, wherein the recess (312) is provided with a plurality of stiffeners (313) arranged in a crisscross pattern.

9. A battery comprising the battery end plate assembly (30) according to any one of claims 1 to 8.

10. An electric apparatus, wherein the electric apparatus comprises the battery (100) according to claim 9, the battery (100) being configured to supply electrical energy.
